# EUROPÄISCHE PATENTSCHRIFT

(11) **EP 2 146 931 B1**
(45) Veröffentlichungstag und Bekanntmachung des Hinweises auf die Patenterteilung: **24.09.2014**
(21) Anmeldenummer: 08736170.5
(22) Anmeldetag: 14.04.2008
(51) Int. Cl.: C01G 31/00, H01M 4/131, H01M 4/485, H01M 10/052

(54) **VERFAHREN ZUR HERSTELLUNG VON LITHIUMREICHEN METALLOXIDEN**
METHOD FOR THE PRODUCTION OF LITHIUM-RICH METAL OXIDES
PROCÉDÉ DE PRÉPARATION D'OXYDES MÉTALLIQUES RICHES EN LITHIUM

(30) Priorität: 16.04.2007 EP 07106255
(43) Veröffentlichungstag der Anmeldung: 27.01.2010
(73) Patentinhaber: BASF SE, 67056 Ludwigshafen (DE)
(72) Erfinder: BRAMNIK, Kirill, 68163 Mannheim (DE); HIBST, Hartmut, 69198 Schriesheim (DE); PRÖLSS, Julian, 67549 Worms (DE)
(86) Internationale Anmeldenummer: PCT/EP2008/054465
(87) Internationale Veröffentlichungsnummer: WO 2008/125647

(56) Entgegenhaltungen:
- US-A- 6 083 475
- SEE-HOW NG, NICOLAS TRAN, KIRILL G. BRAMNIK, HARTMUT HIBST, PETR NOVÁK: "A Feasibility Study on the Use of Li4V3O8 as a High Capacity Cathode Material for Lithium-Ion Batteries" CHEMISTRY - A EUROPEAN JOURNAL, Bd. 14, Nr. 35, 2008, Seiten 11141-11148, XP002539441
- S. JOUANNEAU, A. LE GAL LA SALLE, A. VERBAERE, D. GUYOMARD, M. DESCHAMPS AND S. LASCAUD: "New alkaline earth substituted lithium trivanadates: synthesis, characterization and lithium insertion behavior" J. MATER. CHEM., Bd. 13, 2003, Seiten 1827-1834, XP002539442
- JIN KAWAKITA, YASUSHI KATAYAMA, TAKASHI MIURA, TOMIYA KISHI: "Structural properties of Li1+xV3O8 upon lithium insertion at ambient and high temperature" SOLID STATE IONICS, Bd. 107, Nr. 1-2, 1998, Seiten 145-152, XP002539443

## Beschreibung

Die vorliegende Erfindung betrifft ein Verfahren zur Herstellung von lithiumreichen Metalloxiden. Erfindungsgemäß hergestellte lithiumreiche Metalloxide sind zur Herstellung einer Kathode für eine Batterie geeignet.

In einer zunehmend mobilen Gesellschaft spielen tragbare elektrische Geräte eine immer größere Rolle. Seit vielen Jahren finden wiederaufladbare Batterien Einsatz in nahezu allen Lebensbereichen. Bei der Entwicklung neuartiger Batteriesysteme ist es von besonderem Interesse, auf kostengünstige Weise wiederaufladbare Batterien herstellen zu können, die ein hohes Maß an Sicherheit bei der Benutzung mit einer hohen spezifischen Kapazität verbinden. Darüber hinaus sollten ihre Temperatur- und Stoß-Empfindlichkeit sowie ihre Selbstentladungsrate gering sein. Weiterhin sollte eine möglichst große Zahl von Lade- und Entladevorgängen ohne Kapazitätsverluste möglich sein (d. h. hohe Zyklierbarkeit), wodurch der Produkt-Lebenszyklus der Batterie verlängert werden kann.

Die Anode einer modernen Hochenergie-Lithiumionenbatterie besteht heute typischerweise aus Graphit, aber sie kann auch auf metallischem Lithium, einer Lithiumlegierung oder einer Lithiumverbindung basieren. Für den Aufbau der Kathode einer modernen Lithiumionenbatterie hat sich in den letzten Jahren die Verwendung von lithiierten Metalloxiden wie Lithium-Cobalt-Oxid, Lithium-Nickel-Oxid, Lithium-Mangan-Oxid oder besonders Lithium-Vanadium-Oxid bewährt.

Die beiden Elektroden werden in einer Lithiumionenbatterie unter Verwendung eines flüssigen oder auch festen Elektrolyten miteinander verbunden. Als flüssige Elektrolyte kommen insbesondere nicht-wässrige Elektrolyte und geschmolzene Salze in Frage. Als feste Elektrolyte können beispielsweise ionisch leitende Polymere verwendet werden.

Bei der Nutzung einer Lithiumionenbatterie (Entladung) mit einer Kathode aus einem lithiierten Metalloxid wandern Lithiumionen in die schichtförmige Struktur des lithiierten Metalloxids, aus der sie beim Ladevorgang wieder herausgelöst werden können. Bei der Entladung der Batterie wird Lithium der Anode zu Lithiumionen oxidiert, welche dann durch den Elektrolyten zur Kathode wandern. Bei der Wiederaufladung einer Lithiumionenbatterie erfolgt eine Reduktion der Lithiumionen an der Anode. Sowohl bei der Entladung als auch bei der Wiederaufladung der Batterie wandern die Lithiumionen in der Regel durch einen Separator.

Damit eine Batterie langfristig eingesetzt werden kann, muss nicht nur die Anode und der Elektrolyt, sondern auch die Kathode eine hohe chemische und elektrochemische Stabilität aufweisen. Da die Aufnahme- und Abgabefähigkeit der in Schichten aufgebauten lithiierten Metalloxide für die Stabilität und auch für die Kapazität der Kathode von großer Bedeutung ist, besteht eine wichtige Aufgabe darin, lithiierte Metalloxide zu entwickeln, die strukturbedingt ein langfristig reversibles Ein- und Auswandern von Lithiumionen in die Elektrode ermöglichen.

Seit die Kristallstruktur der relativ lithiumarmen Lithium-Vanadium-Oxide mit der Formel Li₁₊ₓV₃O₈ (mit x von 0 bis 0.6) vor etwa 50 Jahren erstmals detailliert beschrieben worden ist (A. D. Wadsley, Acta Cryst. 1957, Bd. 10, S. 261-7), haben sich zahlreiche Arbeitsgruppen weltweit mit der Verwendung von Lithium-Vanadium-Oxiden für den Aufbau von elektrochemischen Zellen befasst. So beschreibt zum Beispiel US-Patent 3929504 bereits im Jahre 1975 den Aufbau einer wiederaufladbaren Batterie, die neben einer Lithium-Anode und einem Elektrolytmaterial auch eine Kathode bestehend aus Vanadiumpentoxid enthält. Später wurden in US-Patent 3970473 Li_{0.33}V₂O₅ und in US-Patent 5013620 Li_{1,1}V₃O₈ als Kathodenmaterialien beschrieben.

Zur Herstellung von lithiumarmen Lithium-Metalloxiden sind zahlreiche Verfahren bekannt. Beispielsweise kann eine Lithiumverbindung zusammen mit Vanadiumpentoxid auf eine Temperatur von etwa 680°C erhitzt werden, wobei sich eine Schmelzmasse ergibt, die anschließend zu einem Pulver gemahlen werden kann (S. Pistoia et al., Solid State Ionics 13 (1984), Seiten 311 bis 318).

In US-Patent 5520903 wird ein Verfahren zur Herstellung von lithiumarmen Lithium-Vanadium-Oxiden beschrieben, bei dem eine Lithiumverbindung wie Lithiumhydroxid und eine Vanadiumverbindung wie Vanadiumpentoxid gemischt, anschließend gepresst und danach auf eine Temperatur von mindestens 570°C erwärmt wird.

In der US-Patentanmeldung 2005/0026041 werden Lithium-Vanadium-Oxide beschrieben, die hergestellt werden durch Pulverisierung von Vanadiumoxid und Lithiumcarbonat mit anschließender Calcinierung bei 580°C für 10 Stunden. In diesem Dokument werden auch der Aufbau einer Lithiumionenbatterie und die Testung der Kathoden-Stabilität beschrieben.

Viele weitere Verfahren zur Herstellung von lithiumarmen Lithium-Metalloxiden sind bekannt, die die wesentlichen Verfahrensschritte Mischen der Komponenten, Zerkleinern beziehungsweise Mahlen des erhaltenen Vorprodukts und anschließende Calcinierung beinhalten. Aufgrund der hierbei eingesetzten hohen Calcinierungstemperaturen sind diese Verfahren jedoch zur Herstellung von lithiumreichen Metalloxiden, welche häufig thermodynamisch instabil sind, ungeeignet.

S. Jouaneau et al. in J, Mater. Chem. 13 (2003), Seite 1827 ff. und J. Kawakita et al. in Solid State Ionics 107 (1998), Seite 145 ff. offenbaren Lithium-reiche Lithium-Vanadium-Oxide und Verfahren zu ihrer Herstellung.

Die Herstellung von lithiumreichen Metalloxiden wird beispielsweise in US-Patent 5980855 beschrieben. Das Verfahren umfasst die Umsetzung eines Metalloxids mit Lithiummetall in einem organischen Lösungsmittel im Bereich von Raumtemperatur in Gegenwart eines aromatischen Kohlenwasserstoffs als Katalysator.

Die Herstellung von lithiumreichen Vanadiumoxiden durch Umsetzung von lithiumarmem Vanadiumoxid mit n-Butyllithium in n-Hexan bei Raumtemperatur beschreiben J. Kawakita et al. in Solid State Ionics 118 (1999), Seiten 141 bis 147.

In US-Patent 6083475 wird die Herstellung lithiierter Metalloxide durch Umsetzung eines Metalloxids mit Lithiumsulfid in einem organischen Lösungsmittel unter Rückfluss offenbart. Das Lösungsmittel wird vorzugsweise so gewählt, dass es sowohl das Lithiumsulfid als auch den sich bildenden Schwefel löst während das Metalloxid und auch das lithiierte Metalloxid nicht gelöst werden.

Alle diese Verfahren lassen sich nur mit großem Aufwand in großtechnischem Maßstab durchführen oder führen zu Verfahrensprodukten, welche nicht zur Herstellung von leistungsstarken und dauerhaften Kathoden geeignet ist.

Eine Aufgabe der vorliegenden Erfindung war es daher, ein verbessertes Verfahren zur Herstellung von lithiumreichen Metalloxiden bereitzustellen, welches technisch einfach durchführbar ist und es ermöglicht, auch in größeren Mengen und in einem wiederholbaren Prozess ein stabiles Kathodenmaterial für Lithiumionenbatterien herzustellen. Es war eine weitere Aufgabe der vorliegenden Erfindung, ein Verfahren bereitzustellen, dessen Verfahrensprodukt ohne aufwendige Reinigungs- und Separationsschritte zur Herstellung von Kathoden weiter verarbeitet werden kann,

Die Aufgabe der Erfindung wird gelöst durch ein Verfahren zur Herstellung von lithiumreichen Metalloxiden, bei dem zunächst eine entsprechendes Metalloxid oder lithiumarmes Metalloxid mit Lithiumsulfid innig vermischt und anschließend einer thermischen Behandlung unterzogen wird, wobei der sich bildende elementare Schwefel gasförmig aus der Reaktionsmischung entfernt wird.

Gegenstand der Erfindung ist somit ein Verfahren zur Herstellung von lithiumreichen Metalloxiden, dadurch gekennzeichnet, dass ein Gemisch aus einem Metalloxid oder einem lithiumarmen Metalloxid und Lithiumsulfid in der festen Phase einer thermischen Behandlung unterzogen und dabei elementarer Schwefel absublimiert wird.

Die erfindungsgemäß zu verwendenden Metalloxide müssen mit Lithium eine Verbindung bilden können, wodurch ihre Verwendung als Kathodenmaterial in Lithiumionenbatterien ermöglicht wird. Als Metalloxid geeignet sind Vanadiumoxide wie V₂O₅, V₃O₈ oder V₆O₁₃.

Als lithiumarme Metalloxide werden im Rahmen dieser Erfindung Metalloxide wie zuvor definiert verstanden, die bereits eine kleine Menge Lithium enthalten. Unter lithiumarm versteht man hierbei Verbindungen, bei denen das Molverhältnis von Lithiumatomen zu Metallatomen des Metalloxids höchstens 1 zu 2,30 beträgt, vorzugsweise höchstens 1 zu 2,70, besonders bevorzugt höchstens 1 zu 3,00. Bevorzugt sind Lithium-Vanadium-Oxide der allgemeinen Formel Li₁₊ₓV₃O₈ (mit x von 0 bis 0,29).

Unter Lithiumsulfid soll jede binäre Lithium-Schwefel-Verbindung verstanden werden, vorzugsweise Li₂S.

Das erfindungsgemäß zu verwendende Gemisch aus einem Metalloxid oder einem lithiumarmen Metalloxid und Lithiumsulfid erhält man durch möglichst innige Vermischung der Komponenten mittels gängiger Labormethoden, beispielsweise durch gemeinsames Verreiben in einem Mörser oder gemeinsames Mahlen in einer Mühle. Da feinteilige Feststoffe inniger miteinander vermischt werden können als grobpartikuläre, sind pulverförmige Ausgangsstoffe bevorzugt, besonders mit Teilchengrößen von höchstens 500 µm.

Das Verhältnis von Metalloxid oder lithiumarmen Metalloxid zu Lithiumsulfid in dem erfindungsgemäß zu verwendende Gemisch richtet sich nach der gewünschten Zusammensetzung des herzustellenden lithiumreichen Metalloxids. In der Regel wird man das Verhältnis der Ausgangsstoffe so wählen, dass das Molverhältnis von Lithiumatomen zu Metallatomen des Metalloxids mindestens 1 zu 2,29 beträgt, vorzugsweise mindestens 1 zu 1,00, besonders bevorzugt mindestens 1,25 zu 1.

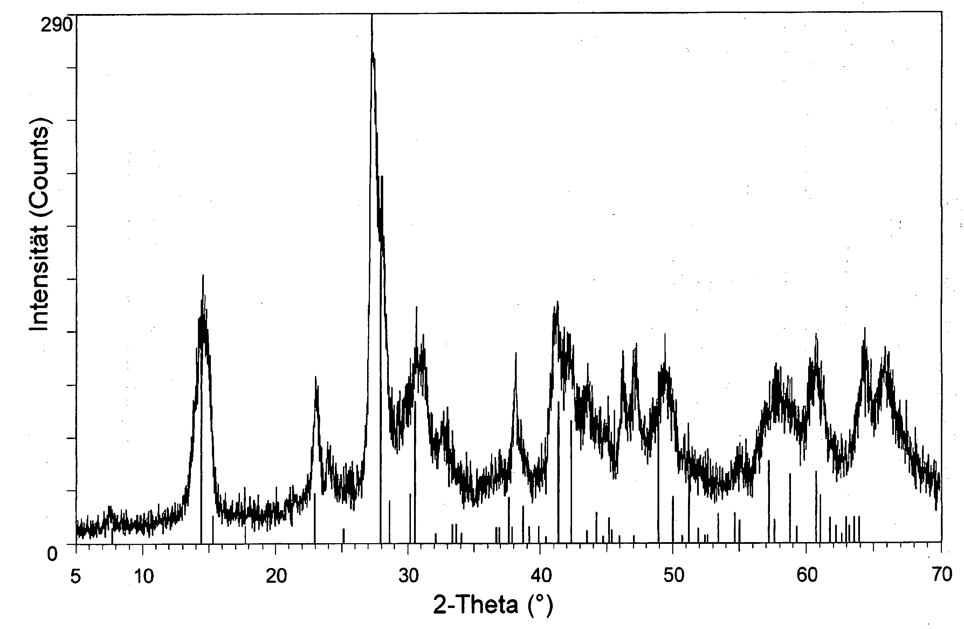

In einer bevorzugten Ausführungsform der Erfindung handelt es sich bei den lithiumreichen Metalloxide um Lithium-Vanadium-Oxide mit einer Zusammensetzung gemäß der allgemeinen Formel Li₁₊ₓV₃O₈ (mit x von 0,3 bis 3,9). Bevorzugt sind solche Lithium-Vanadium-Oxide, die in einem mittels Kupfer-K_{α}-Strahlung aufgenommenen Röntgenpulverbeugungsdiagramm keine deutliche Linie im Bereich 2 Theta gleich 27 bis 28 Grad aufweisen. Besonders bevorzugt sind Lithium-Vanadium-Oxide, deren Röntgenpulverbeugungsdiagramm dem in Figur 1 dargestellten im Wesentlichen entspricht.

In einer weiteren bevorzugten Ausführungsform der Erfindung wird als lithiumarmes Metalloxid ein Lithium-Vanadium-Oxid mit einer Zusammensetzung gemäß der allgemeinen Formel Li₁₊ₓV₃O₈ (mit x von 0,1 bis 0,29) eingesetzt, welches beispielsweise aus Vanadiumpentoxid und Lithiumcarbonat hergestellt werden kann (vgl. IT 1148606).

Während der erfindungsgemäß durchzuführenden thermischen Behandlung des Gemisches bildet sich das gewünschte lithiumreiche Metalloxid und elementarer Schwefel, welcher durch Sublimation aus der Reaktionsmischung entfernt wird. Vorzugsweise wird die thermische Behandlung unter Bedingungen durchgeführt (Temperatur, Druck, Zeitdauer, Durchmischung, Gasatmosphäre), die geeignet sind, ein im Wesentlichen strukturell einheitliches und schwefelfreies lithiumreiches Metalloxid zu bilden.

Die thermische Behandlung erfolgt bei Temperaturen im Bereich von 100 bis 300°C, vorzugsweise im Bereich von 125 bis 275°C, besonders bevorzugt im Bereich von 150 bis 250°C.

Die Zeitdauer der thermischen Behandlung liegt in der Regel zwischen 0,5 und 48 Stunden, bevorzugt zwischen 1 und 20 Stunden, besonders bevorzugt zwischen 2 und 10 Stunden. Während dieser Zeit kann die Temperatur entweder konstant gehalten oder auch in Form eines Temperaturprogramms in den genannten Bereichen variiert werden.

Die thermische Behandlung kann sowohl bei Normaldruck als auch bei reduziertem Druck durchgeführt werden, wobei die Durchführung bei reduziertem Druck bevorzugt ist, um die Sublimation des gebildeten Schwefels zu erleichtern. Besonders bevorzugt ist die Durchführung bei einem Druck im Bereich von 0.01 bis 10 mbar.

Die thermische Behandlung ist vorzugsweise unter einer inerten Atmosphäre durchzuführen, beispielsweise unter Stickstoff- oder Argonatmosphäre.

Während der thermischen Behandlung wird das erfindungsgemäß zu verwendende Gemisch vorzugsweise bewegt, beispielsweise in einem gerührten Reaktor oder einem Drehrohrofen. Die Bewegung ermöglicht einen schnellen Wärmetransport und beschleunigt die Sublimation des gebildeten Schwefels. Der Schwefel schlägt sich in der Regel in kühleren Bereichen des Reaktors oder Ofens als gelber Belag nieder.

Nach der thermischen Behandlung wird das Produkt gegebenenfalls noch abgekühlt, beispielsweise durch einen inerten Gasstrom oder durch Kühlen mit der natürlichen Abkühlgeschwindigkeit des Ofens.

Falls erforderlich kann das Produkt noch mit einem Lösungsmittel gewaschen werden, um eventuell anhaftenden Schwefel oder überschüssiges Lithiumsulfid zu entfernen. Vorzugsweise erfolgt eine solche Waschung mit einem organischen Lösungsmittel, beispielsweise aliphatischen Alkoholen wie Methanol, Ethanol oder Isopropanol oder aromatischen Kohlenwasserstoffen wie Toluol oder Benzol.

Es wurde beobachtet, dass die Temperatur der thermischen Behandlung einen erheblichen Einfluss auf die spezifische Oberfläche des lithiumreichen Metalloxids hat, bei niedrigeren Temperaturen entstehen in der Regel Produkte mit größerer spezifischer Oberfläche.

Die nach dem erfindungsgemäßen Verfahren erhältlichen lithiumreichen Metalloxide können vor ihrer weiteren Verwendung noch mechanisch verändert, z. B. gemahlen, zerkleinert, tablettiert, kompaktiert oder verknetet werden, wobei bei den genannten Schritten auch Hilfsmittel zum Einsatz gebracht werden können. Beispielsweise ist der Einsatz von Wasser oder organischen, festen oder flüssigen Verbindungen zur Erzeugung eines Breis oder einer formbaren Masse möglich.

Die vorliegende Erfindung betrifft auch lithiumreiche Metalloxide, welche nach dem oben beschriebenen Verfahren hergestellt werden können. Diese lithiumreichen Metalloxide haben vorzugsweise eine spezifische Oberfläche (gemessen nach der BET-Methode nach Brunauer-Emmet-Teller) von 0,5 bis 50 m²/g, besonders bevorzugt von 8 bis 30 m²/g, insbesondere von 10 bis 20 m²/g.

Die vorliegende Erfindung betrifft auch die Verwendung der erfindungsgemäßen lithiumreichen Metalloxide zur Herstellung einer Kathode für eine Batterie, insbesondere eine Lithiumionenbatterie. Weiterhin betrifft die Erfindung eine Kathode für eine Lithiumionenbatterie, welche ein erfindungsgemäßes lithiumreichen Metalloxide enthält.

Zur Herstellung einer Kathode wird das lithiumreiche Metalloxide vorzugsweise mit mindestens einem elektrisch leitfähigen Material vereint, wie es beispielsweise in WO 2004/082047 beschrieben ist.

Ein weiterer Gegenstand der Erfindung ist somit eine Kathode für eine Lithiumionenbatterie, enthaltend ein lithiumreiches Metalloxid mit einer spezifischen Oberfläche von 0,5 bis 50 m²/g und mindestens ein elektrisch leitfähiges Material.

Als leitfähiges Material kommen zum Beispiel Ruß, Graphit, Kohlenstofffasern, Nanocarbonfasern, Nanocarbonröhren oder elektrisch leitfähige Polymere in Frage. Typischerweise werden etwa 2,5 bis 40 Gew.-% des leitfähigen Materials zusammen mit dem lithiumreichen Metalloxid in der Kathode verwendet. Hierzu werden das lithiumreichen Metalloxid und das elektrisch leitfähige Material gegebenenfalls unter Einsatz eines organischen Lösungsmittels und gegebenenfalls eines organischen Bindemittels (z. B. Polyisobuten) miteinander verrührt, gegebenenfalls in Form gebracht (z. B. ausgestrichen) und anschließend getrocknet. Dabei kommt beispielsweise eine Temperatur von 80 bis 150°C zum Einsatz. Der Trocknungsprozess kann auch bei vermindertem Druck stattfinden und dauert in der Regel 3 bis 48 Stunden.

Für die Herstellung einer Kathode unter Verwendung der erfindungsgemäßen lithiumreichen Metalloxide und mindestens einem elektrisch leitfähigen Material kommen insbesondere folgende polymeren Materialien als Bindemittel in Frage:
Polyethylenoxid (PEO), Cellulose, Polyethylen, Polypropylen, Polytetrafluorethylen, Polyacrylnitril-Methylmethacrylat, Polytetrafluorethylen, Styrol-Butadien-Copolymere, Tetrafluorethylen-Hexafluorethylen-Copolymere, Polyvinylidendifluorid-Hexafluorpropylen-Copolymere (PVdF-HFP), Tetrafluorethylen-Hexafluorpropylen-Copolymere, Tetrafluorethylen, Perfluoralkyl-Vinylether-Copolymere, Vinylidenfluorid-Hexafluorpropylen-Copolymere, Ethylen-Tetrafluorethylen-Copolymere, Vinylidenfluo-rid-Chlortrifluoroethylen-Copolymere, Ethylen-Chlorfluorethylen-Copolymere, Ethylen-Acrylsäure-Copolymere (mit und ohne Einschluss von Natriumionen), Ethylen-Methacrylsäure-Copolymere (mit und ohne Einschluss von Natriumionen), Ethylen-Methacrylsäureester-Copolymere (mit und ohne Einschluss von Natriumionen), Polyimide und Polyisobuten.

Die Auswahl des Bindemittels erfolgt gegebenenfalls unter Berücksichtigung der Eigenschaften des eventuell verwendeten Lösungsmittels. Das Bindemittel wird in der Regel in einer Menge von 1 bis 10 Gew.-% bezogen auf die Gesamtmischung des Kathodenmaterials eingesetzt. Vorzugsweise werden 2 bis 8 Gew.-%, insbesondere 3 bis 7 Gew.-% eingesetzt.

Die Erfindung betrifft auch die Verwendung der erfindungsgemäßen lithiumreichen Metalloxide und mindestens einem elektrisch leitfähigen Material in elektrochemischen Zellen. Diese kann zum Beispiel eine prismatische Dünnfilm-Struktur aufweisen, in welcher ein fester Dünnfilm-Elektrolyt zwischen einem Film, der eine Anode darstellt, und einem Film, der eine Kathode darstellt, angeordnet ist. Ein zentraler Kathodenstromabnehmer ist zwischen jedem der Kathodenfilme angeordnet, um eine doppelflächige Zellenkonfiguration zu bilden.

In einer anderen Ausführungsform kann eine einflächige Zellenkonfiguration eingesetzt werden, bei welcher ein einzelner Kathodenstromabnehmer einer einzelnen Anode/Separator/Kathode-Elementkombination zugeordnet ist. In dieser Konfiguration ist ein Isolierfilm typischerweise zwischen einzelnen Anode/Separator/Kathode/Stromabnehmer-Elementkombinationen angeordnet.

Zu Figur 1:
Fig. 1 zeigt die Ergebnisse einer Röntgenpulverbeugung (XRD) für das Produkt des Beispiels 1. Das XRD wurde unter Verwendung einer Cu-K_{α}-Strahlung bei 2-Theta von 5 Grad bis 64 Grad in Schritten von 0,02 Grad und mit einer Röntgendauer von 3,6 Sekunden pro Schritt auf einem Röntgengerät "D4-Endeavor" des Herstellers Bruker gemessen.

Die Erfindung wird durch die nachfolgenden Beispiele näher erläutert.

### Beispiel 1

### a) Herstellung von Li_{1,1}V₃O₈

In einem mit einem heizbaren Doppelmantel ausgestatteten 10-I-Glasrührbehälter wurden 7,0 l destilliertes Wasser auf 90°C erhitzt. Im vorgelegten 90°C heißen Wasser wurden unter Rühren nacheinander 351,26 g Ammoniummetavanadat NH₄VO₃ (99,9 Gew.-%ig; entsprechend 3 Mol; Lieferant GfE GmbH, 90431 Nürnberg) und 47,47 g Lithiumhydroxid LiOH ● H₂O (mit einem Gehalt von 55,5 Gew.-% LiOH; entsprechend 1,1 Mol, Lieferant Chemetall GmbH, 60487 Frankfurt a. M.) zu einer klaren, gelben Lösung gelöst. Die Lösung wurde bei einer Temperatur von 90°C für 15 Stunden gerührt (pH = 8,0). In einem Sprühtrockner (Typ Mobile Minor™ 2000, MM, Hersteller Fa. Niro A/S, 2860 SØborg, Dänemark) wurde mit Luft sprühgetrocknet (Eingangstemperatur = 330°C, Ausgangstemperatur = 107°C).

Vom erhaltenen hellbraunen Sprühpulver wurden 50 g unter strömender Luft (10 Nl/h) in einer sich kontinuierlich drehenden (8 Umdrehungen pro Minute) Quarzkugel mit einem Innenvolumen von 1 l auf 300°C aufgeheizt und danach 1 h lang bei dieser Temperatur gehalten. Anschließend wurde das Produkt unter fortwährendem Drehen der Quarzkugel auf Raumtemperatur abgekühlt. Man erhielt ein dunkelbraunes Pulver, dessen mit Cu-Kα-Strahlung aufgenommenes Pulverbeugungsdiagramm das Vorliegen von Li_{1,1}V₃O₈ anzeigte.

### b) Herstellung von Li_{3.5}V₃O₈

14,42 g des unter a) hergestellten Li_{1,1}V₃O₈ und 2,75 g Li₂S (98%ig, Aldrich) wurden in einem Achatmörser homogen vermischt und in einen sich kontinuierlich drehenden (70 U/min) 250 ml Quarzglaskolben überführt. Der Kolben wurde bis auf einen Druck von 0,17 mbar evakuiert und in dynamischen Vakuum in 20 min auf 200°C in einem Nabertherm-Ofen aufgeheizt. Diese Temperatur wurde über 8 h gehalten. Auf den kalten aus dem Ofen ausragenden Teilen des Kolbens setzte sich während der Reaktion ein gelber Belag ab. Anschließend wurde das Produkt unter fortwährendem Drehen der Quarzkugel auf Raumtemperatur abgekühlt.

Das erhaltene schwarze Pulver wurde anschließend unter N₂-Atmosphäre über eine Schlenkfritte mit 250 ml warmem Ethanol abs. (in 3 Port.) und 250 ml warmem Toluol (in 3 Port.) gewaschen und über Nacht unter N₂-Strom getrocknet. Das mit Cu-Kα-Strahlung aufgenommene Pulverbeugungsdiagramm zeigt das Vorliegen einer zu Li_{2,7}V₃O₈ isostrukturellen Phase (siehe Figur 1). Das Molverhältnis von Lithium zu Vanadium im Produkt beträgt 3,42 zu 3, bestimmt mittels Atomabsorptionsspektrometrie (AAS).

## Patentansprüche

1. Verfahren zur Herstellung von Metalloxiden gemäß der allgemeinen Formel Li₁₊ₓV₃O₈ mit x von 0,3 bis 3,9, **dadurch gekennzeichnet, dass** ein Gemisch aus einem Vanadiumoxid oder einem lithiumarmen Vanadiumoxid und Lithiumsulfid in der festen Phase einer thermischen Behandlung unterzogen und dabei elementarer Schwefel absublimiert wird.

2. Verfahren nach Anspruch 1, **dadurch gekennzeichnet, dass** bei dem lithiumarmen Vanadiumoxid das Molverhältnis von Lithiumatomen zu Vanadiumatomen des Vanadiumoxids höchstens 1 zu 2,30 beträgt.

3. Verfahren nach einem der Ansprüche 1 bis 2, **dadurch gekennzeichnet, dass** als lithiumarmes Vanadiumoxid ein Lithium-Vanadium-Oxid mit einer Zusammensetzung gemäß der allgemeinen Formel Li₁₊ₓV₃O₈ (mit x von 0,1 bis 0,29) eingesetzt wird.

4. Verfahren nach einem der Ansprüche 1 bis 3, **dadurch gekennzeichnet, dass** die thermische Behandlung bei Temperaturen im Bereich von 100 bis 300°C über eine Zeit von 0,5 bis 48 Stunden erfolgt.

## Claims

1. A process for preparing metal oxides corresponding to the general formula Li₁₊ₓV₃O₈ where x is from 0.3 to 3.9, which comprises subjecting a mixture of a vanadium oxide or a vanadium oxide with low lithium content and lithium sulfide in the solid state to a thermal treatment and subliming off elemental sulfur.

2. The process according to claim 1, wherein the vanadium oxide with low lithium content has a molar ratio of lithium atoms to vanadium atoms of the vanadium oxide of not more than 1:2.30.

3. The process according to either of claims 1 and 2, wherein a lithium vanadium oxide having a composition corresponding to the general formula Li₁₊ₓV₃O₈ (where x is from 0.1 to 0.29) is used as vanadium oxide with low lithium content.

4. The process according to any of claims 1 to 3, wherein the thermal treatment is carried out at temperatures in the range from 100 to 300°C for a time of from 0.5 to 48 hours.

## Revendications

1. Procédé de fabrication d'oxydes métalliques de formule générale Li₁₊ₓV₃O₈ avec x allant de 0,3 à 3,9, **caractérisé en ce qu'**un mélange d'un oxyde de vanadium ou d'un oxyde de vanadium pauvre en lithium et de sulfure de lithium en phase solide est soumis à un traitement thermique et le soufre élémentaire est éliminé par sublimation.

2. Procédé selon la revendication 1, **caractérisé en ce que**, dans l'oxyde de vanadium pauvre en lithium, le rapport molaire entre les atomes de lithium et les atomes de vanadium de l'oxyde de vanadium est d'au plus 1 sur 2,30.

3. Procédé selon l'une quelconque des revendications 1 à 2, **caractérisé en ce qu'**un oxyde de lithium-vanadium ayant une composition selon la formule générale Li₁₊ₓV₃O₈ (avec x allant de 0,1 à 0,29) est utilisé en tant qu'oxyde de vanadium pauvre en lithium.

4. Procédé selon l'une quelconque des revendications 1 à 3, **caractérisé en ce que** le traitement thermique a lieu à des températures dans la plage allant de 100 à 300 °C pendant une durée de 0,5 à 48 heures.
